# EUROPÄISCHE PATENTANMELDUNG

(11) **EP 1 119 165 A2**
(43) Veröffentlichungstag der Anmeldung: **25.07.2001**
(21) Anmeldenummer: 00125573.6
(22) Anmeldetag: 22.11.2000
(51) Int. Cl.: H04M 3/42, H04M 3/493, H04Q 3/72, H04M 3/48

(54) **Verfahren zur Verwaltung einer Anrufliste**

(30) Priorität: 19.01.2000 DE 10002031
(71) Anmelder: Tenovis GmbH & Co. KG, 60326 Frankfurt (DE)
(72) Erfinder: Pohlit, Reinhard, 60529 Frankfurt (DE); Wagner, Joachim, 35625 Huettenberg (DE); Vautz, Rolf, 65795 Hattersheim (DE)
(74) Vertreter: Bohnenberger, Johannes, Dr.

(57) **Zusammenfassung**

Die Erfindung betrifft ein Verfahren und Einrichtungen zur Verwaltung einer Anrufliste. Ein Telefonapparat (A) mit der Fähigkeit zur Führung einer Anrufliste kann in der Anrufliste die Telefonnummern von Teilnehmern (B) speichern, welche den Apparat (A) angerufen haben, ohne dass jedoch eine Verbindung zustande kam. Bei dem Verfahren wird dem Anrufer (B) vom Angerufenen (A) oder der Vermittlungsanlage (10) ein Signal zugeleitet, das anzeigt, ob der angerufene Apparat (A) über eine Anrufliste verfügt oder nicht. Der Anrufer (B) weiß daher, ob er sich auf einen Rückruf verlassen kann oder sich erneut um eine Verbindung bemühen muss.

Der Anrufer (B) kann ferner den Eintrag seiner Rufnummer in die Anrufliste des angerufenen Apparates (A) nur wahlweise freigeben. Ferner kann der Anrufer (B) dem angerufenen Apparat (A) auch ein Signal übermitteln, welches zur Löschung der Rufnummer des Anrufers (B) in der Anrufliste des Apparates (A) führt.

## Beschreibung

### Technisches Gebiet

Die Erfindung betrifft ein Verfahren zur Verwaltung einer Anrufliste, ein Telefon, insbesondere mit einem Speichersystem zur Führung einer Anrufliste, sowie eine Vermittlungsanlage mit Einrichtungen zur Übermittlung der Rufnummer eines Anrufers an den Angerufenen.

### Stand der Technik

Verfahren und Einrichtungen der oben genannten Art sind von modernen Telefonanlagen bekannt. Insbesondere in digitalen Telefonnetzen wie dem ISDN (Integrated Services Digital Network) gehören sie zu den angebotenen erweiterten Funktionalitäten. Beim Führen einer Anrufliste durch einen Teilnehmer des Fernsprechnetzes werden die Rufnummern ankommender Anrufe gespeichert, falls diese Anrufe nicht angenommen wurden. Der Teilnehmer kann dann zum Beispiel nach Abwesenheit vom Arbeitsplatz anhand der Anrufliste feststellen, welche Anrufe zwischenzeitlich eingegangen sind, und sich entscheiden, ob und in welcher Reihenfolge er Rückrufe tätigt. Der anrufende Teilnehmer kann seinerseits auf einen solchen Rückruf warten, das heißt, er muss nicht durch erneute Anrufe versuchen, den gewünschten Gesprächspartner zu erreichen.

Nachteilig bei dem bekannten Verfahren ist jedoch, dass der Anrufer nicht überprüfen und beeinflussen kann, ob seine Rufnummer in eine Anrufliste eingetragen wird oder nicht. Dies kann zu überflüssigen oder missverständlichen Kommunikationsversuchen führen, zum Beispiel, wenn sich der Grund des Anrufes zwischenzeitlich erledigt hat oder wenn der Anrufer einen Apparat benutzt hat, an dem er später nicht mehr zur Entgegennahme des Rückrufes anwesend ist. Weiterhin gibt es auch Telefonapparate (analoge Telefone oder einfache ISDN-Telefone), die die Möglichkeit der Führung einer Anrufliste nicht bieten. Der Anrufer weiß daher in der Regel bei Anruf zu einem fremden Apparat nicht, ob er in eine Anrufliste übernommen worden ist und er sich somit darauf verlassen kann, dass ein Rückruf erfolgt.

### Darstellung der Erfindung, Aufgabe, Lösung, Vorteile

Aufgabe der vorliegenden Erfindung war es, ein Verfahren und Vorrichtungen zur Verfügung zu stellen, welche eine verbesserte Funktionalität hinsichtlich der Verwaltung einer Anrufliste bieten und Missverständnisse in der Kommunikation vermeiden.

Diese Aufgabe wird durch ein Verfahren zur Verwaltung einer Anrufliste nach Anspruch 1 gelöst.

Das Verfahren ist dadurch gekennzeichnet, dass dem Anrufer ein Signal gesendet wird, welches die Fähigkeit des Angerufenen zum Speichern der Rufnummer des Anrufers in eine Anrufliste anzeigt. Der Anrufer ist hierdurch nicht mehr im Ungewissen, ob der von ihm angerufene Apparat über eine Anrufliste verfügt oder nicht. Er kann daher entscheiden, ob er auf einen Rückruf des nicht erreichten Gesprächspartners warten kann oder ob er die Versuche, diesen zu erreichen, fortsetzen muss.

Sofern der Telefonapparat des Anrufers beziehungsweise die Vermittlungsanlage, welche die Weiterleitung des Anrufes an den Angerufenen übernimmt, hierfür eingerichtet sind, erfolgt die Übermittlung der Rufnummer des Anrufers an den Angerufenen, so dass dieser die Rufnummer in seine Anrufliste übernehmen kann. Diese Übermittlung der Rufnummer des Anrufers kann dabei standardmäßig immer erfolgen, das heißt ohne Unterscheidung, ob der Angerufene eine Anrufliste besitzt oder nicht. Die Übermittlung der Rufnummer des Anrufers kann jedoch auch vom Anrufer beziehungsweise der Vermittlungsanlage erst dann initiiert werden, wenn das oben genannte Signal, das das Vorhandensein einer Anrufliste anzeigt, vom Angerufenen gesendet wurde.

In einer unabhängigen Weiterentwicklung der Erfindung nach Anspruch 2 erfolgt die Übermittlung der Rufnummer des Anrufers an den Angerufenen vorzugsweise nur dann, wenn eine Freigabe durch den Anrufer erfolgt ist. Der Anrufer kann somit für jedes Telefonat entscheiden, ob sein Anruf auf der Gegenseite in eine Anrufliste übernommen werden soll oder nicht. Wenn nach den Umständen des Anrufes, zum Beispiel bei besonderer Dringlichkeit, ein Rückruf keinen Sinn machen würde, kann ein solcher von vornherein vermieden werden, indem der Anrufer erst gar nicht eine Speicherung in der Anrufliste zulässt. Ebenso können Rückrufe ausgeschlossen werden, die voraussichtlich zur falschen Zeit oder am falschen Ort, das heißt an einem Apparat, an dem sich der Anrufer nicht mehr befindet, eingehen würden. Die Möglichkeit zur Freigabe der Übermittlung seiner Rufnummer wird dem Anrufer vorzugsweise nach Erhalt des oben genannten Signals angeboten, welches auf das Vorhandensein einer Anrufliste beim Angerufenen hinweist. Ist keine solche Anrufliste vorhanden, so braucht der Anrufer keine Übermittlung seiner Rufnummer freizugeben und weiß hierdurch, dass sein Anruf nicht in einer Anrufliste gespeichert wurde. Die Freigabe der Übermittlung der eigenen Rufnummer kann so eingerichtet werden, dass der Anrufer aktiv werden und zum Beispiel eine Taste betätigen muss, wenn eine Übermittlung stattfinden soll. Ebenso ist es möglich, die Unterdrückung einer solchen Übermittlung von einer Aktivität des Benutzers abhängig zu machen.

Zur weiteren Erhöhung der Kommunikationssicherheit kann nach Anspruch 3 der Angerufene nach Speicherung der Rufnummer des Anrufers ein Bestätigungssignal über die erfolgreiche Speicherung an den Anrufer senden. Der Anrufer erfährt hierdurch nicht nur, dass der Angerufene prinzipiell über die Möglichkeit einer Anrufliste verfügt, sondern auch, dass sein Anruf dort erfolgreich eingetragen wurde. Dies vermeidet Missverständnisse, die dadurch entstehen können, dass zum Beispiel der Speicher für die Anrufliste voll ist und daher die Rufnummer des Anrufers nicht in den Speicher übernommen werden konnte. In einem solchen Falle würde sich der Anrufer ohne das Bestätigungssignal fälschlicherweise darauf verlassen, dass sein Anruf in einer Anrufliste erfasst wurde und dass er einen Rückruf erhält. Das genannte Bestätigungssignal kann gegebenenfalls auch mit dem eingangs erwähnten Signal zusammenfallen, welches das Vorhandensein einer Anruflist anzeigt. Dieses Signal würde daher nur dann gesendet, wenn auch eine erfolgreiche Speicherung in der Anrufliste stattgefunden hat.

Die Übermittlung der die Anrufliste betreffenden Signale erfolgt gemäß Anspruch 4 vorzugsweise im Sprachkanal und/oder in einem separaten Datenkanal. Während die erste Möglichkeit eine Realisierung des erfindungsgemäßen Verfahrens auch bei analogen Telefonen erlaubt, hat die Übermittlung im Datenkanal den Vorteil, dass sie die eigentliche Sprechverbindung nicht belastet und dass die Überwachung des Datenkanals von ohnehin vorhandenen Protokollen vorgenommen werden kann.

Gemäß einer Weiterentwicklung der Erfindung nach Anspruch 5 besteht die Möglichkeit, dass der Anrufer an den Angerufenen ein Löschsignal sendet, wobei nach Empfang des Löschsignals die Rufnummer des Anrufers aus der Anrufliste gelöscht wird, sofern sie hierin z.B. von einem früheren Anrufversuch her gespeichert war. Wenn sich der Grund des ersten Anrufs zwischenzeitlich erledigt hat, kann der Anrufer mit Hilfe des genannten Löschsignals diesen ersten Anruf aus der Anrufliste des Angerufenen löschen, so dass ein überflüssiger Rückruf vermieden werden kann. Die Übermittlung eines derartigen Löschsignals ist ein eigenständiger Aspekt der Erfindung und kann daher auch unabhängig davon erfolgen, ob das Telefonsystem die oben beschriebene Möglichkeit besitzt, einem Anrufer mit einem Signal die Fähigkeit zur Führung einer Anrufliste anzuzeigen.

Nach einer anderen Weiterentwicklung der Erfindung gemäß Anspruch 6 kann der Anrufer zusammen mit seiner Rufnummer oder anstelle seiner Rufnummer eine willkürlich von ihm zusammengestellte Zeichenfolge von vorzugsweise alphanumerischen Zeichen übermitteln. Diese Möglichkeit kann wiederum unabhängig davon bestehen, ob das Telefonsystem ein Signal über das Vorhandensein einer Anrufliste senden kann oder nicht. Mit der Möglichkeit, zusammen mit oder anstelle von der Rufnummer eine andere Zeichenfolge zu senden, die typischerweise über den Ziffernblock des Telefons eingegeben werden kann, kann der Anrufer dem Angerufenen zusätzliche Informationen zukommen lassen. So kann er zum Beispiel mitteilen, zu welchen Zeiten er zurückgerufen werden kann, oder er kann eine andere Rufnummer angeben, unter der er für den Rückruf erreichbar ist. Dies ist zum Beispiel dann sinnvoll, wenn der Anruf von einem Apparat aus erfolgt, an welchem sich der Anrufer anschließend nicht mehr aufhält. Vorzugsweise ist das Verfahren so eingerichtet, dass der Angerufene erkennen kann, was die tatsächliche Rufnummer des Anrufers ist und was die willkürlich von diesem übermittelten Zeichen sind. Auf diese Weise kann eine missbräuchliche oder versehentliche Täuschung des Angerufenen durch die Übermittlung einer anderen als der tatsächlichen Rufnummer des Anrufers vermieden werden.

Die Erfindung umfasst ferner ein Telefon nach Anspruch 7 mit einem Speichersystem zur Führung einer Anrufliste, welches dadurch gekennzeichnet ist, dass es eine Signaleinheit zur Abgabe eines Signals an einen Anrufer enthält, wobei das Signal dem Anrufer das Vorhandensein des Speichersystems für die Anrufliste indiziert. Mit einem solchen Telefon ist es möglich, ein Verfahren der oben erläuterten Art durchzuführen, bei welchem dem Anrufer eine Rückmeldung darüber gesendet wird, ob der Angerufene eine Anrufliste führen kann oder nicht. Unsicherheiten über die Existenz einer solchen Anrufliste beziehungsweise ein fälschliches Vertrauen auf deren Vorhandensein können somit vermieden werden.

Weiterhin betrifft die Erfindung nach Anspruch 8 ein Telefon, das eine Signaleinheit zum Empfang eines Signals von einem Angerufenen enthält, wobei das Signal die Fähigkeit des Angerufenen (A) zum Speichern der Rufnummer des Anrufers in einer Anrufliste anzeigt. Mit einem solchen Telefon ist es möglich, ein Verfahren der oben erläuterten Art durchzuführen, bei welchem der Anrufer eine Rückmeldung darüber empfangen kann, ob der Angerufene eine Anrufliste führen kann oder nicht.

Bei einem Telefon der zuletzt beschriebenen Art kann die Auswertung der empfangenen Rückmeldung zum Beispiel darin bestehen, dass nach Erhalt des Signals automatisch die eigene Rufnummer übermittelt wird. Nach Anspruch 9 enthält das Telefon jedoch vorzugsweise eine Anzeigeeinheit, die mit der Signaleinheit verbunden ist und die dem Benutzer des Telefons den Erhalt des Signals anzeigen kann. Hierdurch wird dem Anrufer zur Kenntnis gebracht, dass der Angerufene eine Anrufliste besitzt, so dass er sich auf einen Rückruf einstellen und weitere Anrufversuche unterlassen kann.

Bei einer Weiterentwicklung des Telefons nach Anspruch 10 kann dieses eine Eingabeeinheit enthalten, mit welcher der Benutzer die Übermittlung seiner Rufnummer und/oder weiterer Zeichen an den Angerufenen veranlassen kann. Der Anrufer kann somit bei jedem Telefonat entscheiden, ob seine Rufnummer zur Aufnahme in eine Anrufliste beim anderen Teilnehmer übermittelt werden soll oder nicht. Wenn ein Rückruf nicht notwendig oder sinnvoll ist, kann die Aufnahme in die Anrufliste verhindert und ein überflüssiger Rückruf vermieden werden. Weiterhin kann der Benutzer des Telefons dem Angerufenen zusätzliche Informationen übermitteln, wenn die Eingabeeinheit die Eingabe beliebiger Zeichen erlaubt. Diese Fähigkeit des Telefons kann unabhängig davon bestehen, ob das Telefon mit einer Signaleinheit zum Empfang und zur Auswertung eines Signals betreffend das Vorhandensein einer Anrufliste verfügt oder nicht.

Nach Anspruch 11 können die genannten Signaleinheiten der Telefone mit einem Datenanschluss des Telefons verbunden sein. Auf diese Weise kann die Sendung und/oder der Empfang des Signals, das die Anrufliste anzeigt, auf der Datenleitung erfolgen. Diese verfügt bereits über geeignete und flexible Protokolle zur Steuerung der Datenübertragung.

Alternativ oder ergänzend hierzu können die Signaleinheiten auch mit dem Sprachkanal des Telefons verbunden sein. Diese Variante kommt vor allem deshalb zum Einsatz, weil nicht alle Apparate an einem Datenkanal angeschlossen sind. Dies ist zum Beispiel bei analogen Telefonen der Fall. Das Signal zur Anzeige des Vorhandenseins einer Anrufliste kann dabei durch eine geeignete Tonfolge codiert werden.

Die Erfindung betrifft ferner eine Vermittlungsanlage mit Einrichtungen zur Übermittlung der Rufnummer eines Anrufers an den Angerufenen. Eine solche Vermittlungsanlage ist nach Anspruch 12 dadurch gekennzeichnet, dass sie Einrichtungen zur Übermittlung eines Signals an den Anrufer enthält, wobei das Signal die Fähigkeit des Angerufenen zum Speichern der Rufnummer des Anrufers in einer Anrufliste anzeigt. Mit einer derartigen Vermittlungsanlage, deren grundsätzliche Aufgabe die Kopplung des Anrufers zum Angerufenen über das Fernsprechnetz ist, kann ein Verfahren der eingangs erläuterten Art durchgeführt werden. Das heißt, dass der Anrufer eine Information darüber erhält, ob der angerufene Teilnehmer ihn in eine Anrufliste aufnehmen kann oder nicht, so dass er sich gegebenenfalls auf einen Rückruf einstellen kann.

Das das Vorhandensein einer Anrufliste anzeigende Signal kann dabei vom Telefonapparat des Angerufenen aus gesendet und von der Vermittlungsanlage nur an den Anrufer weitergeleitet werden. Gemäß Anspruch 13 ist es jedoch auch möglich, dass die Vermittlungsanlage einen Speicher enthält, in welchem für jede an die Vermittlungsanlage angeschlossene Endstelle vermerkt werden kann, ob diese Endstelle die Fähigkeit zur Führung einer Anrufliste besitzt oder nicht. Die Vermittlungsanlage kann daher unter Rückgriff auf diesen Speicher das genannte Signal an den Anrufer senden, ohne dass sie erst den Aufbau der Verbindung zum Angerufenen abwarten müsste. Der genannte Speicher der Vermittlungsanlage kann zum Beispiel beim Einrichten eines Telefonanschlusses mit den entsprechenden Informationen versehen werden, oder er kann bei jedem Anruf zu einer Endstelle durch eine entsprechende Abfrage und Rückmeldung von dieser Endstelle aktualisiert werden.

### Bester Weg zur Ausführung der Erfindung

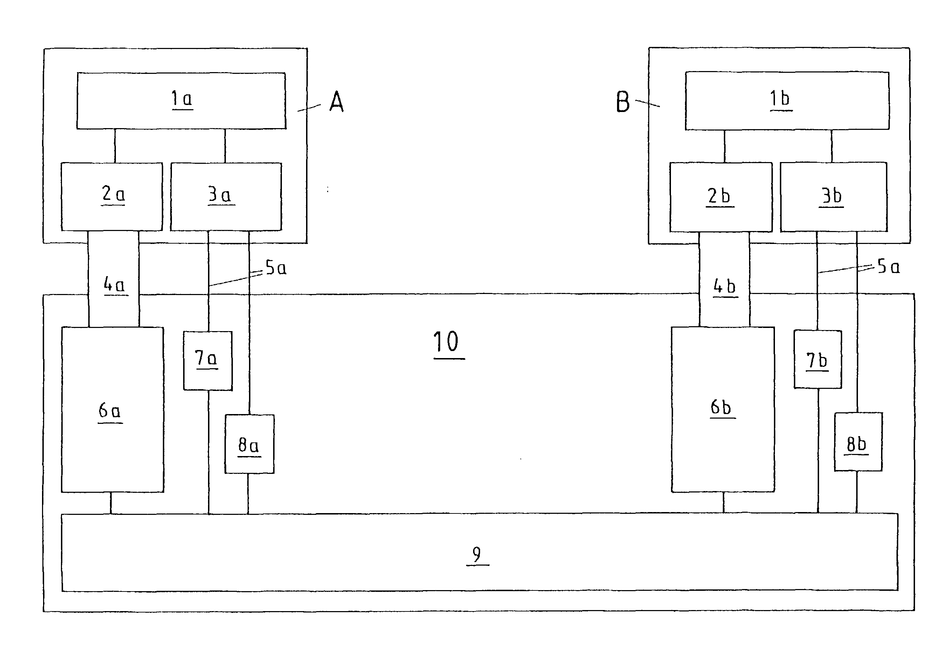

Im folgenden wird die Erfindung mit Hilfe der Figur beispielhaft erläutert.

Die Figur zeigt schematisch ein Telefonsystem bestehend aus einer Vermittlungsanlage 10 und zwei hieran angeschlossenen Endstellen mit Telefonen A und B. Die Vermittlungsanlage 10 übernimmt z.B. die Weiterleitung eines Anrufes vom Telefonapparat B über das Fernsprechnetz an den angerufenen Telefonapparat A.

Das Vermittlungssystem 10 besteht unter anderem aus folgenden Funktionseinheiten:
1. einer Signalisierungs-Steuerung (Signal Control) 6a und 6b für die sogenannte Outband-Signalisierung (OBS) zu jedem Telefonapparat, wie sie zum Beispiel im D-Kanal des ISDN stattfindet (Datenkanal).
2. Empfänger RX 7a und 7b sowie Sender TX 8a und 8b für die sogenannte Inband-Signalisierung (IBS) zu jedem Telefonapparat, wie sie zum Beispiel in herkömmlichen analogen Telefonapparaten stattfindet.
3. Eine Vermittlungssystem-Steuerung (System Controller) 9, welche die von der Signalisierungs-Steuerung 6a beziehungsweise 6b oder von den Empfängern RX 7a beziehungsweise 7b empfangenen Steuerungsinformationen auswertet und ihrerseits Steuerungsinformationen über die Signalisierungs-Steuerungen 6a und 6b beziehungsweise über die Sender TX 8a beziehungsweise 8b erzeugt.

Die Telefonapparate A und B sind über die erwähnten Datenkanäle 4a beziehungsweise 4b sowie über die Sprachkanäle 5a beziehungsweise 5b mit der Vermittlungsanlage 10 verbunden. Die Datenkanäle 4a und 4b fehlen jedoch zum Beispiel bei herkömmlichen analogen Telefonapparaten. Die Telefone A und B enthalten jeweils eine Signalisierungs-Steuerung (Signal Control) 2a beziehungsweise 2b für die Outband-Signalisierung (OBS) zum Vermittlungssystem 10. Bei rein analogen Telefonapparaten können diese Einheiten wiederum fehlen. Weiterhin enthalten die Telefone A und B Einrichtungen zur Erzeugung sowie zur Aufnahme und Wiedergabe von akustischen Signalen (Acoustic System) 3a, 3b. Bei den akustischen Signalen kann es sich um Hörtöne oder MFV-Signale, die zur Tonwahl verwendet werden, handeln. Die genannten akustischen Einrichtungen 3a und 3b sind mit den Sprachkanälen 5a beziehungsweise 5b für die sogenannte Inband-Signalisierung (IBS) verbunden.

Schließlich enthalten die Telefone A und B noch eine Apparatesteuerung (Terminal Control) la beziehungsweise 1b, welche mit den zuvor genannten Einrichtungen 2a, 3a beziehungsweise 2b, 3b verbunden ist. Diese Apparatesteuerung kann im einfachsten Fall aus dem Gabelumschalterkontakt und der Wahltastatur bestehen, bei Apparaten mit höherer Funktionalität jedoch Elemente wie zum Beispiel eine Prozessorsteuerung, einen Datenspeicher und ein Display enthalten.

Im Betrieb der in der Figur dargestellten Anlage wird zum Beispiel der Telefonapparat A vom Telefonapparat B aus gerufen. Diese Information wird im ISDN D-Kanal von der Signalisierungs-Steuerung 6a der Vermittlungsanlage 10 zur Signalisierungs-Steuerung 2a des Telefonapparates A zusammen mit der Rufnummer des anrufenden Telefonapparates B gesendet. Die Apparatesteuerung 1a im Telefonapparat A verfügt über eine Anrufliste und meldet dieses Merkmal zurück zur Vermittlungssystem-Steuerung 9 der Vermittlungsanlage 10. Diese Rückmeldung kann zum Beispiel im ISDN D-Kanal von der Signalisierungs-Steuerung 2a des Telefons A an die Signalisierungs-Steuerung 6a der Vermittlungsanlage gesendet werden. Zusätzlich kann die Übermittlung des Signals auch von dem akustischen System 3a des Telefons A und den Empfänger RX 7a der Vermittlungsanlage 10 erfolgen. Diese Inband-Signalisierung ist bei einem analogen Telefonapparat A die einzig mögliche Übermittlungsart.

Die Vermittlungssystem-Steuerung 9 gibt die erhaltene Information über das Vorhandensein einer Anrufliste im Telefonapparat A an den rufenden Apparat B weiter. Diese Weitergabe kann zum Beispiel über einen Sonderton erfolgen, der im Sender TX 8b der Vermittlungsanlage 10 erzeugt und vom Empfänger im akustischen System 3b des Telefons B empfangen wird. Falls möglich kann die Information zusätzlich als Outband-Signalisierung (OBS) (zum Beispiel im ISDN D-Kanal) von der Signalisierungs-Steuerung 6b des Vermittlungssystems zur Signalisierungs-Steuerung 2b des Telefonapparates B geleitet werden. Der Empfang dieses Signals wird im Telefonapparat B an die Apparatesteuerung 1b weitergemeldet und kann dem Benutzer des Telefons zum Beispiel auf einem Display angezeigt werden.

Wenn sich der Benutzer des Telefons B entscheidet, dass ein Eintrag in die Anrufliste des Telefonapparates A vorgenommen werden soll, so kann er durch Betätigung einer Taste am Telefonapparat B dafür sorgen, dass eine entsprechende Information X zum Vermittlungssystem 10 gesendet wird. Dieses Signal X wird bei einfachen Telefonapparaten von dem akustischen System 3b auf akustischem Wege als Inband-Signal (IBS), bei zum Beispiel ISDN-Apparaten darüber hinaus als Meldung im D-Kanal von der Signalisierungs-Steuerung 2b im Telefon B zur Signalisierungs-Steuerung 6b in der Vermittlungsanlage übertragen. Ferner ist es denkbar, dass der Benutzer des Telefonapparates B zusammen mit dem Signal X weitere Informationen wie zum Beispiel eine Rufnummer, unter der er später zu erreichen ist, an den Teilnehmer A sendet.

Die Vermittlungsanlage 10 gibt die vom Telefonapparat B empfangene Information über den Sender TX 8a als Inband-Signal (IBS) und, sofern vorhanden, auch im D-Kanal 4a als Outband-Signalisierung (OBS) an den Telefonapparat A weiter. Die Apparatesteuerung la im Telefonapparat A nimmt daraufhin den Eintrag in die Anrufliste vor. Gegebenenfalls kann die erfolgreiche Durchführung des Eintrags durch eine Signalisierung auf dem oben beschriebenen Signalweg zum Apparat B quittiert werden.

Bei einer Weiterbildung der Erfindung kann ausgehend vom Telefonapparat B auch die Löschung des Eintrags der Rufnummer dieses Apparates in der Anrufliste des Telefons A durchgeführt werden. Diese Funktion ist zum Beispiel dann sinnvoll, wenn aus einem früheren (erfolglosen) Anrufversuch die Rufnummer des Apparates B in der Anrufliste des Apparates A gespeichert ist, sich der Grund des früheren Anrufes jedoch zwischenzeitlich erledigt hat. Der Benutzer des Telefonapparates B möchte in diesem Falle vermeiden, dass er einen nun nicht mehr erforderlichen Rückruf erhält. Dies kann in der genannten Weise dadurch geschehen, dass bei einem zweiten Anruf anstelle der oben beschriebenen Steuerungsinformation X, die das Kommando zum Eintragen in die Anrufliste darstellt, ein anderes Signal Y übertragen wird, welches dem Telefonapparat A signalisiert, dass die Rufnummer des Anrufers aus der Anrufliste zu streichen ist.

Bei einer Abwandlung des oben beschriebenen Verfahrens kann die Vermittlungsanlage 10 selbst die Information darüber enthalten, ob der angeschlossene Telefonapparat A über die Möglichkeit einer Anrufliste verfügt oder nicht. Sie kann dann mit einer Zeichengabe A (ähnlich wie beim aktivierten Merkmal des "Rückruf bei besetztem Teilnehmer" im ISDN) dem rufenden Teilnehmer B signalisieren, dass ein Eintrag in die Anrufliste vorgenommen werden kann.

## Patentansprüche

1. Verfahren zur Verwaltung einer Anrufliste,
dadurch gekennzeichnet, dass dem Anrufer (B) ein Signal gesendet wird, welches die Fähigkeit des Angerufenen (A) zum Speichern der Rufnummer des Anrufers in einer Anrufliste anzeigt.

2. Verfahren zur Verwaltung einer Anrufliste, insbesondere nach Anspruch 1,
dadurch gekennzeichnet, dass die Übermittlung der Rufnummer des Anrufers (B) an den Angerufenen (A) nur nach Freigabe durch den Anrufer erfolgt.

3. Verfahren nach einem der Ansprüche 1 oder 2,
dadurch gekennzeichnet, dass der Angerufene (A) nach Speicherung der Rufnummer des Anrufers (B) in der Anrufliste ein Bestätigungssignal hierüber an den Anrufer sendet.

4. Verfahren nach einem der Ansprüche 1 bis 3,
dadurch gekennzeichnet, dass die Übermittlung der die Anrufliste betreffenden Signale im Sprachkanal (IBS) (5a, 5b) und/oder in einem separaten Datenkanal (OBS) (4a, 4b) erfolgt.

5. Verfahren zur Verwaltung einer Anrufliste, insbesondere nach einem der Ansprüche 1 bis 4,
dadurch gekennzeichnet, dass der Anrufer (B) ein Löschsignal an den Angerufenen (A) sendet, nach dessen Empfang die Rufnummer des Anrufers aus der beim Angerufenen geführten Anrufliste gelöscht wird.

6. Verfahren nach einem der Ansprüche 1 bis 5,
dadurch gekennzeichnet, dass der Anrufer (B) zusammen mit seiner Rufnummer und/oder anstelle seiner Rufnummer eine wahlweise zusammengestellte Zeichenfolge übermitteln kann.

7. Telefon (A) mit einem Speichersystem zur Führung einer Anrufliste,
dadurch gekennzeichnet, dass es eine Signaleinheit (2a, 3a) zur Abgabe eines Signals an einen Anrufer (B) enthält, wobei das Signal dem Anrufer das Vorhandensein des Speichersystems anzeigt.

8. Telefon (B),
dadurch gekennzeichnet, dass es eine Signaleinheit (2b, 3b) zum Empfang eines Signals von einem Angerufenen (A) enthält, wobei das Signal die Fähigkeit des Angerufenen (A) zum Speichern der Rufnummer des Anrufers in einer Anrufliste anzeigt.

9. Telefon nach Anspruch 8,
dadurch gekennzeichnet, dass es eine Anzeigeeinheit (1b) enthält, die mit der Signaleinheit (2b, 3b) verbunden ist und die dem Benutzer den Erhalt des Signals vom Angerufenen anzeigen kann.

10. Telefon nach Anspruch 8 oder 9,
dadurch gekennzeichnet, dass es eine Eingabeeinheit enthält, mit welcher der Benutzer die Übermittlung seiner Rufnummer und/oder weiterer Zeichen an den Angerufenen veranlassen kann.

11. Telefon nach einem der Ansprüche 7 bis 10,
dadurch gekennzeichnet, dass die Signaleinheit (2a, 2b) mit einem Datenanschluss (OBS) (4a, 4b) verbunden ist und/oder dass die Signaleinheit (3a, 3b) mit dem Sprachkanal (IBS) (5a, 5b) des Telefons (A, B) verbunden ist.

12. Vermittlungsanlage (10) mit Einrichtungen zur Übermittlung der Rufnummer eines Anrufers an den Angerufenen,
dadurch gekennzeichnet, dass sie Einrichtungen (6a, 7a, 8a; 6b, 7b, 8b) zur Übermittlung eines Signals, das die Fähigkeit des Angerufenen (A) zum Speichern der Rufnummer des Anrufers (B) in einer Anrufliste anzeigt, an den Anrufer (B) enthält.

13. Vermittlungsanlage nach Anspruch 12,
dadurch gekennzeichnet, dass sie einen Speicher enthält, in welchem für jede angeschlossene Endstelle (A, B) vermerkt werden kann, ob diese die Fähigkeit zur Führung einer Anrufliste besitzt.
